# EUROPEAN PATENT SPECIFICATION

(11) **EP 4 149 772 B1**
(45) Date of publication and mention of the grant of the patent: **03.06.2026**
(21) Application number: 21728607.9
(22) Date of filing: 14.05.2021
(51) Int. Cl.: B60B 21/02, B60B 21/04, B60B 21/10

(54) **A WHEEL CONSTRUCTION**
RADAUFBAU
CONSTRUCTION DE ROUE

(30) Priority: 15.05.2020 GB 202007227
(43) Date of publication of application: 22.03.2023
(73) Proprietor: Moveero Limited, Hadley, Telford TF1 6AA (GB)
(72) Inventor: BRAME, Gianpietro, Telford West Midlands TF1 6AA (GB); BENNETZEN, Ulla, Telford West Midlands TF1 6AA (GB); ERIKSEN, Kristoffer, Telford West Midlands TF1 6AA (GB); DALL, Ole, Telford West Midlands TF1 6AA (GB)
(74) Representative: Forresters IP LLP
(86) International application number: PCT/GB2021/051165
(87) International publication number: WO 2021/229239

(56) References cited:
- EP-A1- 0 410 672
- EP-A1- 0 540 492
- EP-A1- 2 106 927

## Description

This invention relates to a wheel construction and more particularly to a wheel construction for a mobile crane.

Wheel constructions for mobile cranes are known. They typically include a substantially circular rim having axially inner and axially outer flanges, each of which is positioned adjacent a respective bead seat, which provides a seat for a tyre bead of a tyre, which is fitted to a radially outer or "tyre side" of the rim. Such wheel constructions typically also include a disc which is connected to a radially inner side of the rim. The disc enables the wheel to be securable to a hub of a vehicle, for example by the use of bolts.

The disc is connected to the rim in a central portion or 'well' of the rim. The well is positioned between the inner and outer flanges, and may be positioned substantially centrally between the inner and outer flanges. This well will hereinafter be referred to as the central well, despite the fact that the well need not be positioned exactly centrally between the inner and outer flanges. Each bead seat is positioned axially inwardly of the respective flange. Each bead seat includes a substantially straight surface against which a tyre bead is located. Upon inflation of the tyre to its in use pressure, a force is applied to each bead seat and to each flange. Each bead seat has an axially outer end which is attached to the respective flange by a connecting part. Each flange connecting part is a concave portion, and is known in the art as a bead seat radius.

Between each bead seat and the central well is positioned a side part. It is known for the side part to include concave and convex portions, which create 'sub-wells' to form an 'undulating' side part, for example. Each side part is connected to the central well by a respective connecting part. Each of these connecting parts is a concave portion, and will hereinafter be referred to as a well radius. Internationally accepted industry standards, for example the current European Tyre and Rim Technical Organisation (ETRTO) standard, set out certain aspects of wheel design, and criteria which wheel constructions should meet.

Known wheel constructions for mobile crane vehicles (also known as a mobile crane) typically involve a multi-piece wheel rim manufactured from three to five separate pieces. The tyres used for mobile cranes are very stiff because they have high load requirements. The multi-piece rim allows these stiff tyres to be mounted without damage (or a low risk of damage). However, such rims are heavy.

If the weight of the rim can be reduced, then the overall weight of the mobile crane is reduced which increases the load that the mobile crane can lift. For example, a typical the mobile crane has 18 wheels and if each of those wheels can be made lighter, then the overall effect on the mobile crane is potentially relatively large.

A lighter, single piece, wheel rim has been made available, which is manufactured in two parts and welded together. The wheel rim formed has a deep central well and high flanges. This makes mounting the tyres very difficult and the risk of damage to the tyre during mounting high (compared to the multi-piece rim described above). Furthermore, tyres that are removed from such rims are scrapped because they cannot be reused due to the strains put on the tyres by the rim.

Furthermore, because the central well of such a wheel rim is so deep, this has implications for the provision of brakes and brake cooling systems.

GB2522425 discloses a method of manufacturing a wheel sub-assembly for a very large vehicle such as a mobile crane. The wheel sub-assembly includes a wheel rim; and a disc; said wheel rim comprising an axially outer and an axially inner rim portion. EP2106927 discloses a wheel construction for agricultural vehicles or light construction vehicles.

Thus, it is an aim of embodiments of the present invention to alleviate one or more of the problems encountered with prior known wheel rims.

According to an aspect of the present invention we provide a wheel construction for a mobile crane and a mobile crane vehicle having a wheel construction including a rim, the rim including: an inner flange and an outer flange, each of the inner flange and the outer flange having a first end and a second end, the first end of each of the inner and outer flange being positioned axially outwardly relative to the second end of the respective flange, the rim further including: a central well positioned between the inner flange and the outer flange, a pair of bead seats, one being positioned adjacent each flange, each bead seat having an axially outer end which is connected to a second end of the respective flange by a flange connection portion, and an axially inner end which is connected to one of a pair of side parts, each side part being positioned between the central well and one of the inner flange and outer flange, and connected to the central well by a well connecting portion, the axially outer end of each bead seat being positioned radially outwardly relative to the axially inner end of the respective bead seat, wherein at least one of the side parts includes: a convex portion, a first end of the convex portion being positioned adjacent the respective bead seat, the convex portion including a convex surface that extends radially beyond the axially inner end of the bead and a curved portion, wherein a second end of the convex portion is connected to the curved portion of the side part by a first substantially concave surface, which provides a sub-well, the curved portion connecting to the central well, wherein at least one of the inner flange and the outer flange includes an extended portion which extends radially inwardly to a free end, the axially outer end of the bead seat having a first radial position and the free end having a second radial position which extends radially inwardly to substantially the same radial position as the first radial position, or alternatively extends further radially inwardly, to a position further radially inward than the first radial position, and characterised in that the axially inner end of the bead seat is located in a third radial position and the free end extends radially inwardly to substantially the same radial position as the third radial position, or alternatively extends further radially inwardly, to a position further radially inward than the third radial position.

Further optional features are set out in the appended claims.

Some embodiments of the invention will now be described with reference to the accompanying drawings in which:
FIGURE 1 is a perspective view of a wheel construction;
FIGURE 2 is a cross-sectional view of a wheel construction;
FIGURE 3 is an enlarged partial cross-sectional view of the wheel construction in figure 2;
FIGURE 4 partial cross-sectional view of the wheel construction;
FIGURE 5 partial cross-sectional view of the wheel construction;
FIGURE 6 is a cross-sectional view of another embodiment of a wheel construction;
FIGURE 7 is a cross-sectional view of another embodiment of a wheel construction.

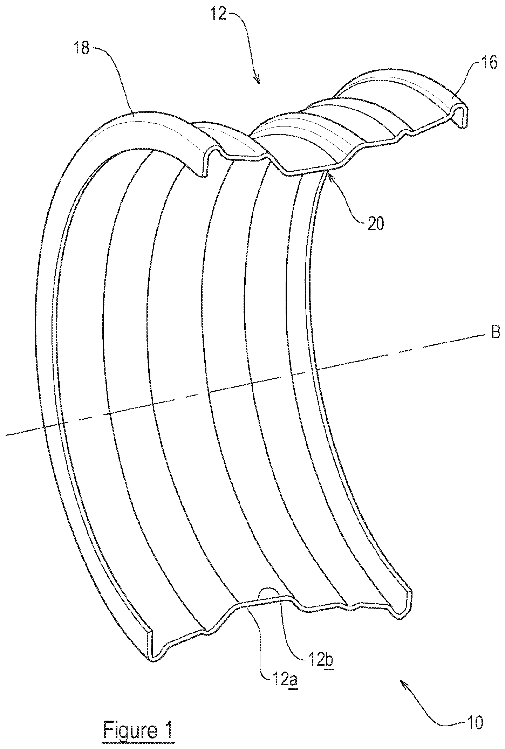

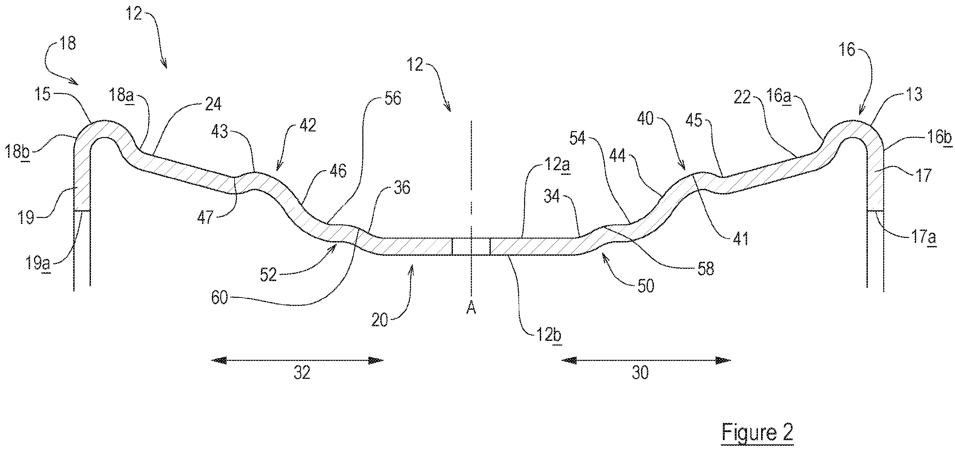

Referring to figures 1 and 2 there is shown a wheel construction 10 which includes a wheel rim 12 (also called rim 12). In some embodiments, the wheel construction 10 also includes a disc (not shown) which is connected to the rim 12. For example, the disc maybe permanently connected to the rim 12, for example by welding. The disc enables the wheel construction 10 to be attached to a hub or an axle of a vehicle. Features of the disc, for example its shape and attachment formations, are typical in nature. It will be appreciated that other forms of disc may be suitable and appropriate.

The wheel rim 12 is substantially circular and includes a radially outer surface 12a (often referred to as tyre-side 12a), upon which, in use, a tyre (not shown) is fitted. A radially inner surface 12b (commonly referred to as a weather side 12b), is a part of the rim 12 to which the disc is attached.

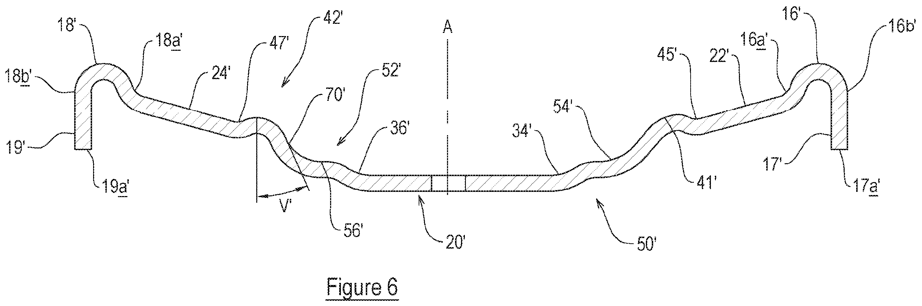

In some embodiments (such as that illustrated in figure 1 to 5), the rim 12 is substantially symmetrical about a central axis A but this need not necessarily be the case (see figure 6). The terms 'inwardly' and outwardly' when used herein are used to describe axial positions, with 'inwardly' meaning closer to an axially central plane, and 'outwardly' meaning further from the axially central plane A

When used herein, the term 'radial' is defined as being generally perpendicular to an axis B (see illustration on figure 1) through the wheel rim 12 (in other words, axis B illustrates a wheel axis about which the wheel will rotate when in use).

The rim 12 includes an inner flange 16, an outer flange 18, and a central well 20 positioned between the inner flange 16 and the outer flange 18. Each flange has a first end 16a, 18a, and a second end 16b, 18b. In an embodiment, at least one of the inner flange 16 and the outer flange 18 includes a convex surface 13, 15, i.e. the or each flange 16, 18 has an externally radiused portion on the tyre side 12a. The radius of curvature of the convex surface 13, 15 of the or each flange 16, 18 may be approximately 12.7mm±1.5mm. A peak of the convex surface 13, 15 of at least one of the flanges 16, 18 may define the greatest radial extent of the rim 12. Each flange 16, 18 has an axial length (for example, the axial length may be around 26mm±2mm).

The central well 20 is a substantially cylindrical portion of the rim 12, with both its tyre side and its inner surface being substantially straight in cross-section. The central well 20 may have a substantially constant radius along its whole axial extent.

The rim 12 also includes a pair of bead seats 22, 24, one being positioned adjacent each flange 16, 18. Each bead seat 22, 24 has a first end, which is connected to the first end 16a, 18a of the respective flange 16, 18 by a respective flange connecting portion. Each bead seat 22, 24 has a second end which is connected to one of a pair of side parts 30, 32 of the rim 12.

The first end of each bead seat 22, 24 is located axially outwardly relative to its respective second end. The first, axially outer, end is positioned radially outwardly relative to the respective second, axially inner, end. The tyre side and inner surface of each bead seat 22, 24 are substantially straight in cross-section, such that each bead seat 22, 24 is substantially frustoconical. The bead seat 22, 24 forms an angle S with a plane perpendicular to axis A. In some embodiments, the angle S is 15 degrees±1 degree.

The or each flange connection portion has a first end, which is adjacent the first end 16a, 18a of the respective flange 16, 18, and a second end which is adjacent the respective bead seat 22, 24. The or each flange connection portion includes a concave surface (in other words, the tyre side of the or each flange connection portion is internally radiused).

The rim 12 includes a pair of side parts 30, 32, each being positioned between the central well 20 and one of the inner flange 16 and outer flange 18. Each side part 30, 32 is connected to the central well 20 by a respective well connecting portion 34, 36. In some embodiments, at least one of the well connecting portions 34, 36 includes a concave surface (in other words, the tyre side of the or each well connecting portion 34, 36 includes an internally radiused surface). Both well connecting portions 34, 36 may include a concave surface. The radius of curvature of each well connecting portion 34, 36 may be between 8 and 30mm (for example, the radius of curvature may be 18mm±1 mm).

At least one of the side parts 30, 32 includes a convex portion 40, 42 and a curved portion 50, 52. A first end of the or each convex portion 40, 42 is positioned adjacent the respective bead seat 22, 24, and is connected to the second end (i.e. the axially inner end) of the respective bead seat 22, 24. The convex portion 40, 42 includes a convex surface 41, 43 (in other words, the tyre side of the or each convex surface 41, 43 may be externally radiused). The radius of curvature of the convex surface 41. 43 may be between 10mm and 25mm (more preferably 23mm±3mm). In some embodiments, the first end of the convex portion 40, 42 may connect to the second end of the bead seat 22, 24 via a concave surface 45, 47 (which may have a radius of 5mm±1 mm).

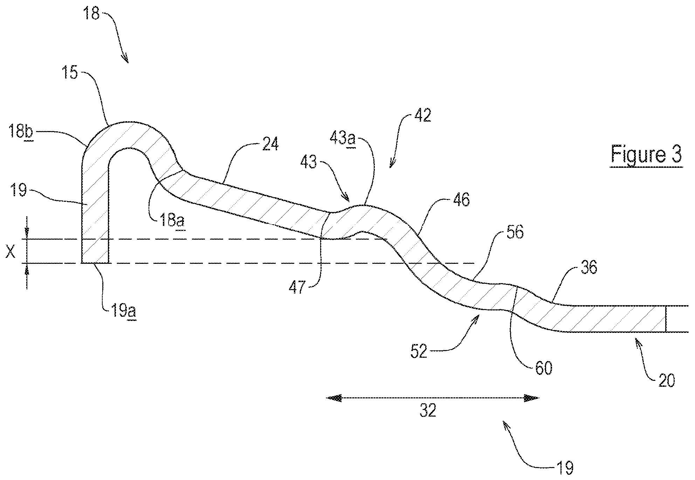

The convex surface 41, 43 extends radially outwardly (i.e. perpendicularly away from the wheel axis B) beyond the second end of the respective bead seat 22, 24 (and radially outwardly of the first end of the convex portion 40, 42) to a point of maximum radius (referenced as 43a in figure 3) of the convex portion 40, 42. In some embodiments, the distance between the flange connection portion (i.e. around the first end of the flange 16a, 18a) and the point of maximum radius of the convex portion 40, 42 is at least 49mm (and more preferably around 49.75mm±1 mm).

From the point of maximum radius (43a in figure 3) of the convex portion 40, 42 to a second end of the convex portion 40, 42, the convex portion 40, 42 extends radially inward. The convex portion 40, 42 may include a straight portion 44, 46, such that it is substantially frustoconical. The straight portion 44, 46 forms an angle T with a plane that is perpendicular to the axis A. In some embodiments, the angle T is between X and X degrees. More preferably the angle T is around 50degrees±5degrees. Angle R is formed between the straight portion 44, 46 and the axis A. In some embodiments (such as those illustrated), angle R is around 40degrees±5degrees (e.g. in the illustrated embodiments, angle R and angle T are related because the tyre side of the rim 12 and the weather side of the rim 12 are substantially parallel to each other).

The second end of the convex portion 40, 42 is positioned adjacent the curved portion 50, 52. The second end of the convex portion 40, 42 is connected to the respective curved portion 50, 52 of the side part 30, 32 by a first substantially concave surface 54, 56 (in other words, the tyre side of first substantially concave surface 54, 56 may be internally radiused). The radius of curvature of the or each first substantially concave surface 54, 56 may be between 8 and 30mm (for example, the radius of curvature may be 18mm±2mm). The first substantially concave surface 54, 56 provides a 'sub-well', positioned between the central well 20 and the respective bead seat 22, 24.

The curved portion 50, 52 is positioned adjacent the well connecting portion 34, 36. In some embodiments, the well connecting portion 34, 36 may be separated from the first substantially concave surface 54, 56 of the curved portion 50, 52 by a convex surface 58, 60. In other words, the curved portion 50, 52 may include an externally radiused portion. The radius of curvature of each convex surface 58, 60 may be between 8 and 30mm (for example, the radius of curvature may be approximately 18mm±1mm). In some embodiments, the first concave surface 54, 56 of the curved region 40 is located axially outwardly of the well connecting portion 34, 36.

It should be appreciated that, in some embodiments, between the well connecting portion 34, 36 and the first concave surface 54, 56 of the curved portion 50, 52 may be a straight portion which is substantially frustoconical or cylindrical (rather than a convex surface).

At least one of the inner flange 16 and the outer flange 18 includes an extended portion 17, 19 which extends radially inwardly from the first (axially outward) end 16b, 18b of the respective flange 16, 18. The extended portion 17, 19 has a free end 17a, 19a (which defines the end / final part of the wheel rim 12). To explain further, the first end of the bead seat 22, 24 is located at a first radial position and the free end 17a, 19a is located at a second radial position. The free end 17a, 19a extends radially inwardly (i.e. the first radial position) to substantially the same radial position as the first radial position. Alternatively, the free end 17a, 19a extends further radially inwardly, to a position further radially inward than the first radial position (i.e. the second radial position is radially inward of the first radial position)

In some preferred embodiments, the second end of the bead seat 22, 24 is located in a third radial position. The free end 17a, 19a extends radially inwardly to substantially the same radial position as the third radial position, or alternatively extends further radially inwardly, to a position further radially inward than the third radial position. In other words, the free end 17a, 19a is located radially inwardly of the second end of the bead seat 22, 24 (in other words, the free end 17a, 19a has a smaller radius (from axis B) than the smallest radius of the bead seat 22, 24). In some embodiments, the free end 17a, 19a is located radially inwardly of the first end of the convex portion 40, 42 (in other words, the free end 17a, 19a has a smaller radial distance from axis B than the smallest radius of the first end (the axially outer end) of the convex portion 40, 42.

In some embodiments, the free end 17a, 19a extends radially inwardly beyond the radial position of the axially inner end of the bead seat by at least 5mm (this is illustrated by "x" in figure 3).

The or each extended portion 17, 19 may include a substantially straight surface, and may be substantially straight along its entire length. The length between the radial peak of the flange and the free end 17a, 19a may be between 19mm and up to 70mm (and preferably around 39mm). In some embodiments, the extended portion 17, 19 of the flange 16, 18 extends radially more than half the distance from the radial maximum of the rim 12 (i.e. the radial peak of the flange 16, 18) to the radial minimum of the rim 12 (i.e. the central well 20).

It should be appreciated that although benefits are seen from using any length extended portion 17, 19 discussed, the ideal position of the free end 17a, 19a (i.e. length of the extended portion 17, 19) is either radially in line with the axially inner end of the bead seat 22, 24 (i.e. so that the free end 17a, 19a and the axially inner end of the bead seat are located at substantially the same radial distance) or the extended portion 17, 19 extends past the radial position of the axial inner end of the bead seat 22, 24. This configuration provides a rim with the strength / stiffness to cope with the stresses applied by the crane tyre that is mounted.

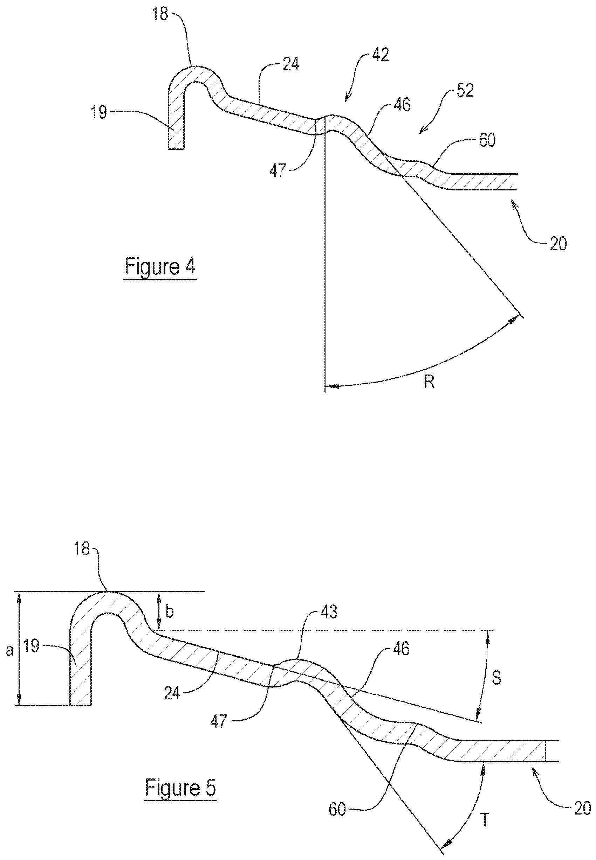

In some embodiments (as illustrated in figure 5), there are preferred ratios of the length of one element of the rim 12 to another element of the rim 12. A height that the flange 16, 18 rises above the outer end of the bead seat 18a (referred to as length "b" in figure 5) versus the overall length of the end of the flange 18b to the free end 17a, 19a (referred to as length "a" in figure 5) is particularly important. In other words, the first end (i.e. axially outer end) of the bead seat 22, 24 (i.e. where the first end 16a, 18a of the flange 16, 18 joins the bead seat 22, 24) is located in a fourth radial position. An extended portion to flange ratio is defined as the distance radially (i.e. parallel distances measured from perpendicular tangents drawn along the relevant parts of the rim 12) between the first radial position and the second radial position and between the distance radially between the first radial position and the fourth radial position. Preferably, the extended portion to flange ratio (i.e. a:b) is be between around 1.49 and 5.5.

It should be appreciated that the length "b" may remain substantially constant between different rims, so the difference in between the a:b ratios may be as a result of changing the length "a".

The extended portion 17, 19 has a first end that is connected to the first end 16b, 18b of the respective flange 16, 18. In some embodiments, the radial position of the first end of the extended portion 17, 19 and the radial position of the free end 17a, 19a relative to the central axis A is substantially the same (i.e. the extended portion extends "downwards" parallel to the central axis A).

In some embodiments, the extended portion 17, 19 may extend axially inwards from the first end to the free end 17a, 19a. In other words, the free end 17a, 19a may be located axially inward of the first end of the extended portion 17, 19 and/or axially inward of the first end of the flange 16a, 18a. For example, the extended portion 17, 19 may be "rolled" inwards to form a curved outer edge of the rim 12.

In some embodiments (see figure 6), the convex portion may take a different shape. The number references for features in figure 6 are the same as those used when describing the rim in figures 1 to 5 with the addition of a prime annotation (for example, rim 12 becomes 12'). If a number reference with a prime annotation is present in figure 6 and not explicitly mentioned in the description it should be assumed to have the same features as the number reference without a prime discussed above.

The convex portion 40', 42' of the rim 12' in figure 6 is located in the same position relative to the other parts of the rim 12' (e.g. the flange 16', 18', bead seat 22', 24', curved portion 50', 52' and central well 20' are all in the same general relative positions). In the illustrated embodiment, the convex surface 41', 43' of the convex portion 40', 42' has a smaller radius of curvature than the embodiment illustrated in the other figures (the radius of curvature is 14.5mm±2mm). In this example, the convex portion 40', 42' includes a curved zone 70' between the convex surface 41', 43 and the curved portion 50', 52'. The curved zone 70' forms an angle V' with a plane that is perpendicular to the axis A'. In some embodiments, the angle V' is between 25 and 28 degrees. More preferably the angle V' is around 26.5 degrees.

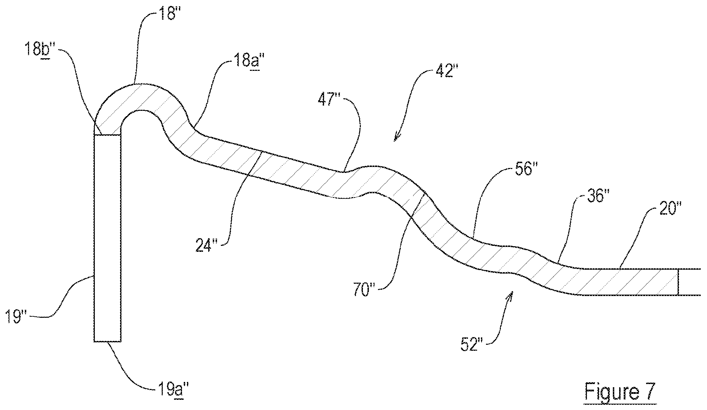

In some embodiments (see, for example, figure 7), the extended portion may be substantially longer than discussed above. The number references for features in figure 7 are the same as those used when describing the rim in figures 1 to 5 with the addition of a double prime annotation (for example, rim 12 becomes 12"). If a number reference with a double prime annotation is present in figure 7 and not explicitly mentioned in the description it should be assumed to have the same features as the number reference without a prime discussed above.

In some embodiments, the extended portion 17", 19" may be a plate member 60" which is attached to the first end 16b", 18b" of the respective flange 16", 18". In this example, the length of the extended portion 17", 19" may be up to around 114mm. The plate member 60" may be an annular plate / tube which allows the extended portion 17", 19" to be longer than would otherwise be possible by making the rim 12" in a single piece of material. In this example, the plate member 60" is welded to the flange 16", 18". In this embodiment, the extended portion to flange ratio "a:b" is up to around 9.

In embodiments in which the extended portion 17, 19 is up to around 70mm in length, it can be formed with the rest of the rim 12 in a single piece. This may be advantageous because the overall rim 12 may be stronger and/or less prone to breakage if formed as a single piece rather than multiple pieces. If the extended portion 17", 19" is longer than 70mm then is made by attaching (e.g. by welding) an additional plate member to the formed rim 12" to the flange 16", 18" and, thus, the rim 12" is made from two separate pieces that are joined together. Attaching the additional plate member may increase the cost of production due to the complexity of joining the plate member to the rim 12".

In this embodiment, the two side parts 30', 32' are not symmetrical about the central axis A'. In some embodiments, the side part 30' may be shaped as is described above in relation to figure 1 to 5 and the side part 32' is shaped as discussed directly above. It should be appreciated that the side parts 30', 32' could be symmetrical about the central axis A', if desired.

Knurling may be provided on the tyre side 12a of the rim 12. For example, knurling may be provided on at least a part of at least one of the bead seats 22, 24. Standard knurling, which is typically used in the art is preferable to a relatively high amount of knurling, or deep knurling, as this reduces the likelihood of damage to the tyre in the event that the tyre slips circumferentially relative to the rim during fitting or during driving of a vehicle to which the rim 12 and the corresponding tyre are fitted. The combination of the extended portions 17, 19 in combination with the shape of the profile of the rim, in particular the shape of the or each side part 30, 32 avoids the need to provide additional and/or deep knurling to achieve reduced incidences of tyre slippage compared to known rim profiles.

The examples of sizes, including lengths and radii, provided in this specification are in relation to a rim 12 having a nominal rim width W of approximately 292mm between the first end 16a of the inner flange 16 and the first end 18a of the outer flange 18 (and each flange may be about 26mm wide). Furthermore, the wheel diameter may be around 647mm - it should be appreciated that this rim could be used on a range of different wheel diameters. It will be appreciated that corresponding sizes for rims 12 of differing nominal widths may have to be factored appropriately.

The invention facilitates the tyre mounting process for heavy vehicles, for example, mobile crane vehicles, which typically have stiff tyre walls. Thus, the risk of damage to the tyre during fitting on the rim 12 is reduced. In combination with reducing the risk of damaging the tyre when mounting / demounting on the rim 12, the stiffness of the rim 12 is such that the total material weight of the rim 12 can be reduced while maintaining the required strength for use in a mobile crane vehicle. The rim 12 described is around 6mm±1mm thick.

When a tyre which is being fitted to the rim 12 is inflated, during the mounting process, a low pressure is used, for safety reasons. The profile of the rim 12, particularly the features of the or each side part 30, 32, facilitates movement of a bead of the tyre in a generally axial direction towards each bead seat 22, 24, and inhibits the or each bead of the tyre from 'sticking' on the respective side part 30, 32. The profile of the rim 12, in particular the shape of the or each side part 30, 32 reduces stress in the rim 12. This is particularly advantageous in mobile crane vehicles because reducing the thickness of known rims increases the risk of cracking the rim during use whereas the shape applied to the described crane rim 12 reduces that risk by reducing and/or moving the stress points on the rim 12.

As mentioned above, the profile of the rim 12, in particular the extended portions 17, 19 of the or each flange 16, 18 provides increased stiffness of the rim 12, particularly in the region of the rim 12 near to the or each flange 16, 18. In addition to the advantages outlined above, the increased stiffness of the rim 12 also means that the rim 12 is less likely to yield under the load of the tyre, making the rim 12 advantageous for high load capacity applications, which typically require stiffer tyres. The increased stiffness, and lower likelihood of yielding leads to increased surface pressure between the rim 12 and the corresponding tyre. In turn this leads to greater friction between the rim 12 and the tyre, and less likelihood of slippage of the tyre generally circumferentially relative to the rim 12.

The inclusion of the or each extended portion 17, 19 minimises, or at least reduces shrinkage of the rim during tyre mounting and/or inflation. This provides a more consistent rim profile.

The rim 12 is particularly advantageous in reducing generally circumferential slipping of a corresponding tyre relative to the rim 12 for high traction, low pressure tyres. The profile of the rim 12, in particular the shape of the of each side part 30, 32 is advantageous in the mounting of relatively stiff, high load capacity tyres the use of which is facilitated, at least in part, by the provision of the extended portions 17, 19 of the or each flange 16, 18.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Although certain example embodiments of the invention have been described, the scope of the present invention is only limited by the subject-matter of the annexed claims.

## Claims

1. A wheel construction (10) for a mobile crane including a rim (12), the rim (12) including:
an inner flange (16) and an outer flange (18), each of the inner flange (16) and the outer flange (18) having
a first end (16b, 18b) and a second end (16a, 18a), the first end (16b, 18b) of each of the inner and outer flange (16, 18) being positioned axially outwardly relative to the second end (16a, 18a) of the respective flange (16, 18), the rim (12) further including:
a central well (20) positioned between the inner flange (16) and the outer flange (18),
a pair of bead seats (22, 24), one being positioned adjacent each flange (16, 18), each bead seat (22, 24) having an axially outer end which is connected to a second end of the respective flange (16, 18) by a flange connection portion, and an axially inner end which is connected to one of a pair of side parts (30, 32), each side part (30, 32) being positioned between the central well (20) and one of the inner flange (16) and outer flange (18), and connected to the central well (20) by a well connecting portion (34, 36), the axially outer end of each bead seat (22, 24) being positioned radially outwardly relative to the axially inner end of the respective bead seat (22, 24), wherein at least one of the side parts (30, 32) includes:
a convex portion (40, 42), a first end of the convex portion being positioned adjacent the respective bead seat (22, 24), the convex portion (40, 42) including a convex surface (41, 43) that extends radially beyond the axially inner end of the bead (22, 24) and
a curved portion (50, 52), wherein a second end of the convex portion (40, 42) is connected to the curved portion (50, 52) of the side part (30, 32) by a first substantially concave surface (54, 56), which provides a sub-well, the curved portion (50, 52) connecting to the central well (20), wherein
at least one of the inner flange (16) and the outer flange (18) includes an extended portion (17, 19) which extends radially inwardly to a free end (17a, 19a), the axially outer end of the bead seat (22, 24) having a first radial position and the free end (17a, 19a) having a second radial position which extends radially inwardly to substantially the same radial position as the first radial position, or alternatively extends further radially inwardly, to a position further radially inward than the first radial position, and **characterised in that** the axially inner end of the bead seat (22, 24) is located in a third radial position and the free end (17a, 19a) extends radially inwardly to substantially the same radial position as the third radial position, or alternatively extends further radially inwardly, to a position further radially inward than the third radial position.

2. A wheel construction (10) according to claim 1 wherein the curved portion (50, 52) is connected to the central well (20) by a well connecting portion (34, 36), which well connecting portion (34, 36) having a concave surface.

3. A wheel construction (10) according to claim 2 wherein the curved portion (50, 52) includes a convex surface (58, 60), which is between the first substantially concave surface (54, 56) of the curved portion (50, 52) and the well connecting portion (34, 36), or alternatively wherein the curved portion (50, 52) includes a frustoconical or cylindrical surface, which is between the first substantially concave surface (54, 56) of the curved portion (50, 52) and the well connecting portion (34, 36).

4. A wheel construction (10) according to any of the preceding claims wherein each flange connection portion includes a substantially concave surface and / or wherein the convex portion (40, 42) includes a straight portion, which is generally frustoconical, connecting the convex surface (41, 43) of the convex portion (40, 42) to the curved portion (50, 52).

5. A wheel construction according to any of claims 1 to 4 wherein the convex portion (40, 42') includes a curved zone (70'), which connects the convex surface (41', 43') of the convex portion (40', 42') to the curved portion (50' 52') and / or wherein the free end (17a, 19a) of the extended portion (17, 19) is located radially inward relative to the first end of the convex portion (40, 42).

6. A wheel construction (10) according to any of the preceding claims wherein the free end (17a, 19a) of the extended portion (17, 19) is located radially between the radial position of the axially inner end of the bead seat (22, 24) and the radial position of the first end of the curved portion.

7. A wheel construction (10) according to claim 6 wherein the free end (17a, 19a) is located approximately midway between the radial position of the axially inner end of the bead seat (22, 24) and the radial position of the first end of the curved portion (50, 52).

8. A wheel construction (10) according to any of the preceding claims wherein the length of the or each extended portion (17, 19) is between 18mm and 70mm from a radial peak of the flange (16, 18) to the free end (17a, 19a), and more preferably around 39mm from the radial peak of the flange to the free end (17a, 19a) and / or wherein the free end (17a, 19a) extends radially inwardly beyond the radial position of the axially inner end of the bead seat (22, 24) by 5mm.

9. A wheel construction (10) according to any of the preceding claims wherein the or each extended portion (17, 19) is substantially straight and / or wherein the radial position of a first end (17a, 19a) of the extended portion (17, 19) and a radial position of the free end (17a, 19a) of the extended portion (17, 19) relative to a central axis is substantially the same.

10. A wheel construction (10) according to any of the preceding claims wherein at least one of the flanges (16, 18) includes a convex surface (13, 15) and optionally wherein the free end (17, 19) of the or each extended portion (17, 19) lies axially outwardly relative to a radial peak of the convex surface (13, 15) of the respective flange (16, 18).

11. A wheel construction (10) according to any of the preceding claims wherein the axially outer end of the bead seat (22, 24) is located in a fourth radial position and an extended portion to flange ratio defined as the distance radially between the first radial position and the second radial position and the distance radially between the first radial position and the fourth radial position, is between around 1.49 and 5.

12. A wheel construction according to any of claims 1 and 11 wherein the or each extended portion (17", 19") includes an additional plate member (60") which is attached to the flange (16", 18"), and optionally wherein the length of the or each extended portion (17", 19") is up to around 114mm.

13. A wheel construction (10) according to any one of the preceding claims wherein at least one of the well connecting portions (34, 36) includes a concave surface and / or wherein the pair of side parts (30, 32) may be substantially identical to one another, albeit a mirror image of one another about a substantially radially extending plane and / or wherein the rim is substantially symmetrical about a central axis and / or wherein the wheel construction further includes a disc which is attachable to the rim (12).

14. A mobile crane vehicle including a wheel construction (10) according to any of the preceding claims.

## Patentansprüche

1. Radkonstruktion (10) für einen Mobilkran mit einer Felge (12), wobei die Felge (12) Folgendes umfasst:
einen Innenflansch (16) und einen Außenflansch (18), wobei sowohl der Innenflansch (16) als auch der Außenflansch (18) jeweils Folgendes aufweisen:
ein erstes Ende (16b, 18b) und ein zweites Ende (16a, 18a), wobei das erste Ende (16b, 18b) des Innen- und Außenflanschs (16, 18) axial nach außen relativ zum zweiten Ende (16a, 18a) des jeweiligen Flanschs (16, 18) positioniert ist, wobei die Felge (12) ferner Folgendes beinhaltet:
ein zentrales Bett (20) zwischen dem Innenflansch (16) und dem Außenflansch (18),
ein Paar Wulstsitze (22, 24), von denen einer neben jedem Flansch (16, 18) positioniert ist, wobei jeder Wulstsitz (22, 24) ein mit einem zweiten Ende des jeweiligen Flanschs (16, 18) durch einen Flanschverbindungsabschnitt verbundenes axial äußeres Ende und ein mit einem von einem Paar Seitenteilen (30, 32) verbundenes axial inneres Ende aufweist, wobei jedes Seitenteil (30, 32) zwischen dem zentralen Bett (20) und dem Innenflansch (16) oder dem Außenflansch (18) positioniert und über einen Bettverbindungsabschnitt (34, 36) mit dem zentralen Bett (20) verbunden ist, wobei das axial äußere Ende jedes Wulstsitzes (22, 24) radial außen relativ zu dem axial inneren Ende des jeweiligen Wulstsitzes (22, 24) positioniert ist, wobei mindestens eines der Seitenteile (30, 32) Folgendes aufweist:
einen konvexen Abschnitt (40, 42), wobei ein erstes Ende des konvexen Abschnitts neben dem jeweiligen Wulstsitz (22, 24) positioniert ist, wobei der konvexe Abschnitt (40, 42) eine konvexe Oberfläche (41, 43) aufweist, die sich radial über das axial innere Ende des Wulstsitzes (22, 24) hinaus erstreckt, und
einen gekrümmten Abschnitt (50, 52), wobei ein zweites Ende des konvexen Abschnitts (40, 42) mit dem gekrümmten Abschnitt (50, 52) des Seitenteils (30, 32) durch eine erste im Wesentlichen konkave Oberfläche (54, 56) verbunden ist, die ein Subbett bildet, wobei der gekrümmte Abschnitt (50, 52) mit dem zentralen Bett (20) verbunden ist, wobei
der Innenflansch (16) und/oder der Außenflansch (18) einen verlängerten Abschnitt (17, 19) aufweist/-en, der sich radial nach innen zu einem freien Ende (17a, 19a) erstreckt, wobei das axial äußere Ende des Wulstsitzes (22, 24) eine erste radiale Position und das freie Ende (17a, 19a) eine zweite radiale Position aufweist, die sich radial nach innen bis zu im Wesentlichen derselben radialen Position wie die erste radiale Position erstreckt oder sich alternativ weiter radial nach innen bis zu einer Position erstreckt, die weiter radial nach innen liegt als die erste radiale Position,
und **dadurch gekennzeichnet, dass** sich das axial innere Ende des Wulstsitzes (22, 24) in einer dritten radialen Position befindet und das freie Ende (17a, 19a) sich radial nach innen bis zu im Wesentlichen derselben radialen Position wie die dritte radiale Position erstreckt oder sich alternativ weiter radial nach innen bis zu einer Position erstreckt, die weiter radial nach innen liegt als die dritte radiale Position.

2. Radkonstruktion (10) nach Anspruch 1, wobei der gekrümmte Abschnitt (50, 52) mit dem zentralen Bett (20) durch einen Bettverbindungsabschnitt (34, 36) verbunden ist, wobei der Bettverbindungsabschnitt (34, 36) eine konkave Oberfläche aufweist.

3. Radkonstruktion (10) nach Anspruch 2, wobei der gekrümmte Abschnitt (50, 52) eine konvexe Oberfläche (58, 60) aufweist, die sich zwischen der ersten im Wesentlichen konkaven Oberfläche (54, 56) des gekrümmten Abschnitts (50, 52) und dem Bettverbindungsabschnitt (34, 36) befindet, oder alternativ, wobei der gekrümmte Abschnitt (50, 52) eine kegelstumpfförmige oder zylindrische Oberfläche aufweist, die sich zwischen der ersten im Wesentlichen konkaven Oberfläche (54, 56) des gekrümmten Abschnitts (50, 52) und dem Bettverbindungsabschnitt (34, 36) befindet.

4. Radkonstruktion (10) nach einem der vorherigen Ansprüche, wobei jeder Flanschverbindungsabschnitt eine im Wesentlichen konkave Oberfläche aufweist und/oder wobei der konvexe Abschnitt (40, 42) einen geraden Abschnitt aufweist, der allgemein kegelstumpfförmig ist und die konvexe Oberfläche (41, 43) des konvexen Abschnitts (40, 42) mit dem gekrümmten Abschnitt (50, 52) verbindet.

5. Radkonstruktion nach einem der Ansprüche 1 bis 4, wobei der konvexe Abschnitt (40, 42') eine gekrümmte Zone (70') aufweist, die die konvexe Oberfläche (41', 43') des konvexen Abschnitts (40', 42') mit dem gekrümmten Abschnitt (50', 52') verbindet, und/oder wobei sich das freie Ende (17a, 19a) des verlängerten Abschnitts (17, 19) radial nach innen relativ zum ersten Ende des konvexen Abschnitts (40, 42) befindet.

6. Radkonstruktion (10) nach einem der vorherigen Ansprüche, wobei sich das freie Ende (17a, 19a) des verlängerten Abschnitts (17, 19) radial zwischen der radialen Position des axial inneren Endes des Wulstsitzes (22, 24) und der radialen Position des ersten Endes des gekrümmten Abschnitts befindet.

7. Radkonstruktion (10) nach Anspruch 6, wobei sich das freie Ende (17a, 19a) ungefähr in der Mitte zwischen der radialen Position des axial inneren Endes des Wulstsitzes (22, 24) und der radialen Position des ersten Endes des gekrümmten Abschnitts (50, 52) befindet.

8. Radkonstruktion (10) nach einem der vorherigen Ansprüche, wobei die Länge des oder jedes verlängerten Abschnitts (17, 19) zwischen 18 mm und 70 mm von einem radialen Scheitelpunkt des Flanschs (16, 18) bis zum freien Ende (17a, 19a) und bevorzugter etwa 39 mm vom radialen Scheitelpunkt des Flansches bis zum freien Ende (17a, 19a) beträgt, und/oder wobei sich das freie Ende (17a, 19a) radial nach innen über die radiale Position des axial inneren Endes des Wulstsitzes (22, 24) um 5 mm hinaus erstreckt.

9. Radkonstruktion (10) nach einem der vorherigen Ansprüche, wobei der oder jeder verlängerte Abschnitt (17, 19) im Wesentlichen gerade ist und/oder wobei die radiale Position eines ersten Endes (17a, 19a) des verlängerten Abschnitts (17, 19) und eine radiale Position des freien Endes (17a, 19a) des verlängerten Abschnitts (17, 19) relativ zu einer Mittelachse im Wesentlichen gleich sind.

10. Radkonstruktion (10) nach einem der vorherigen Ansprüche, wobei mindestens einer der Flansche (16, 18) eine konvexe Oberfläche (13, 15) aufweist, und wobei optional das freie Ende (17, 19) des oder jedes verlängerten Abschnitts (17, 19) axial nach außen relativ zu einem radialen Scheitelpunkt der konvexen Oberfläche (13, 15) des jeweiligen Flanschs (16, 18) liegt.

11. Radkonstruktion (10) nach einem der vorherigen Ansprüche, wobei sich das axial äußere Ende des Wulstsitzes (22, 24) in einer vierten radialen Position befindet und ein Verhältnis zwischen verlängertem Abschnitt und Flansch, definiert als der radiale Abstand zwischen der ersten radialen Position und der zweiten radialen Position und der radiale Abstand zwischen der ersten radialen Position und der vierten radialen Position, zwischen etwa 1,49 und 5 liegt.

12. Radkonstruktion nach einem der Ansprüche 1 und 11, wobei der oder jeder verlängerte Abschnitt (17", 19") ein zusätzliches Plattenelement (60") umfasst, das an dem Flansch (16", 18") angebracht ist, und wobei optional die Länge des oder jedes verlängerten Abschnitts (17", 19") bis zu etwa 114 mm beträgt.

13. Radkonstruktion (10) nach einem der vorherigen Ansprüche, wobei mindestens einer der Bettverbindungsabschnitte (34, 36) eine konkave Oberfläche aufweist, und/oder wobei das Paar Seitenteile (30, 32) im Wesentlichen identisch miteinander sein kann, wenn auch spiegelbildlich zueinander um eine im Wesentlichen radial verlaufende Ebene, und/oder wobei die Felge im Wesentlichen symmetrisch um eine Mittelachse ist, und/oder wobei die Radkonstruktion ferner eine Scheibe umfasst, die an der Felge (12) angebracht werden kann.

14. Mobilkranfahrzeug mit einer Radkonstruktion (10) nach einem der vorherigen Ansprüche.

## Revendications

1. Une construction de roue (10) pour une grue mobile, comprenant une jante (12), la jante (12) comportant :
une bride intérieure (16) et une bride extérieure (18), chacune de la bride intérieure (16) et la bride extérieure (18) présentant
une première extrémité (16b, 18b) et une deuxième extrémité (16a, 18a), la première extrémité (16b, 18b) de chacune des brides intérieure et extérieure (16, 18) étant positionnée axialement vers l'extérieur relativement à la deuxième extrémité (16a, 18a) de la bride respective (16, 18), la jante (12) comportant en sus :
un puits central (20) positionné entre la bride intérieure (16) et la bride extérieure (18),
une paire de sièges de talon (22, 24), l'un étant positionné adjacent à chaque bride (16, 18), chaque siège de talon (22, 24) présentant une extrémité axialement extérieure qui est raccordée à une deuxième extrémité de la bride respective (16, 18) par une partie de raccordement de bride, et une extrémité axialement intérieure qui est raccordée à l'une d'une paire de parties latérales (30, 32), chaque partie latérale (30, 32) étant positionnée entre le puits central (20) et l'une de la bride intérieure (16) et la bride extérieure (18), et raccordée au puits central (20) par une partie de raccordement de puits (34, 36), l'extrémité axialement extérieure de chaque siège de talon (22, 24) étant positionnée radialement vers l'extérieur relativement à l'extrémité axialement intérieure du siège de talon respectif (22, 24), au moins une des parties latérales (30, 32) comprenant :
une partie convexe (40, 42), une première extrémité de la partie convexe étant positionnée adjacente au siège de talon respectif (22, 24), la partie convexe (40, 42) comportant une surface convexe (41, 43) qui s'étend radialement au-delà de l'extrémité axialement intérieure du talon (22, 24) et
une partie incurvée (50, 52), une deuxième extrémité de la partie convexe (40, 42) étant raccordée à la partie incurvée (50, 52) de la partie latérale (30, 32) par une première surface sensiblement concave (54, 56), qui forme un sous-puits, la partie incurvée (50, 52) étant raccordée au puits central (20), dans laquelle
au moins une de la bride intérieure (16) et la bride extérieure (18) comporte une partie étendue (17, 19) qui s'étend radialement vers l'intérieur jusqu'à une extrémité libre (17a, 19a), l'extrémité axialement extérieure du siège de talon (22, 24) ayant une première position radiale et l'extrémité libre (17a, 19a) ayant une deuxième position radiale qui s'étend radialement vers l'intérieur jusqu'à sensiblement la même position radiale que la première position radiale, ou éventuellement qui s'étend plus loin radialement vers l'intérieur, jusqu'à une position plus éloignée radialement vers l'intérieur de la première position radiale,
et **caractérisée par le fait que** l'extrémité axialement intérieure du siège de talon (22, 24) est située dans une troisième position radiale et l'extrémité libre (17a, 19a) s'étend radialement vers l'intérieur jusqu'à sensiblement la même position radiale que la troisième position radiale, ou éventuellement s'étend vers l'intérieur radialement plus loin, jusqu'à une position plus loin vers l'intérieur radialement que la troisième position radiale.

2. Une construction de roue (10) selon la revendication 1, dans laquelle la partie incurvée (50, 52) est raccordée au puits central (20) par une partie de raccordement de puits (34, 36), cette partie de raccordement de puits (34, 36) ayant une surface concave.

3. Une construction de roue (10) selon la revendication 2, dans laquelle la partie incurvée (50, 52) comporte une surface convexe (58, 60), qui est entre la première surface sensiblement concave (54, 56) de la partie incurvée (50, 52) et la partie de raccordement de puits (34, 36), ou éventuellement dans laquelle la partie incurvée (50, 52) comporte une surface tronconique ou cylindrique, qui est entre la première surface sensiblement concave (54, 56) de la partie incurvée (50, 52) et la partie de raccordement de puits (34, 36).

4. Une construction de roue (10) selon une quelconque des revendications précédentes, dans laquelle chaque partie de raccordement de bride comporte une surface sensiblement concave et/ou dans laquelle la partie convexe (40, 42) comporte une partie droite, généralement tronconique, raccordant la surface convexe (41, 43) de la partie convexe (40, 42) à la partie incurvée (50, 52).

5. Une construction de roue (10) selon une quelconque des revendications 1 à **4,** dans laquelle la partie convexe (40, 42') comporte une zone incurvée (70'), qui raccorde la surface convexe (41', 43') de la partie convexe (40', 42') à la partie incurvée (50' 52') et/ou dans laquelle l'extrémité libre (17a, 19a) de la partie étendue (17, 19) est située radialement vers l'intérieur relativement à la première extrémité de la partie convexe (40, 42).

6. Une construction de roue (10) selon une quelconque des revendications précédentes, dans laquelle l'extrémité libre (17a, 19a) de la partie étendue (17, 19) est située radialement entre la position radiale de l'extrémité axialement intérieure du siège de talon (22, 24) et la position radiale de la première extrémité de la partie incurvée.

7. Une construction de roue (10) selon la revendication 6, dans laquelle l'extrémité libre (17a, 19a) est située approximativement à mi-chemin entre la position radiale de l'extrémité axialement intérieure du siège de talon (22, 24) et la position radiale de la première extrémité de la partie incurvée (50, 52).

8. Une construction de roue (10) selon une quelconque des revendications précédentes, dans laquelle la longueur de la ou chaque partie étendue (17, 19) est entre 18 mm et 70 mm d'un sommet radial de la bride (16, 18) jusqu'à l'extrémité libre (17a, 19a), et plus préférablement environ 39 mm du sommet radial de la bride jusqu'à l'extrémité libre (17a, 19a) et/ou dans laquelle l'extrémité libre (17a, 19a) s'étend radialement vers l'intérieur au-delà de la position radiale de l'extrémité axialement intérieure du siège de talon (22, 24) sur 5 mm.

9. Une construction de roue (10) selon une quelconque des revendications précédentes, dans laquelle la ou chaque partie étendue (17, 19) est sensiblement droite et/ou dans laquelle la position radiale d'une première extrémité (17a, 19a) de la partie étendue (17, 19) et une position radiale de l'extrémité libre (17a, 19a) de la partie étendue (17, 19) relativement à un axe central est sensiblement la même.

10. Une construction de roue (10) selon une quelconque des revendications précédentes, dans laquelle au moins une des brides (16, 18) comprend une surface convexe (13, 15) et éventuellement dans laquelle l'extrémité libre (17, 19) de la ou chaque partie étendue (17, 19) se trouve axialement vers l'extérieur relativement à un sommet radial de la surface convexe (13, 15) de la bride respective (16, 18).

11. Une construction de roue (10) selon une quelconque des revendications précédentes, dans laquelle l'extrémité axialement extérieure du siège de talon (22, 24) est située dans une quatrième position radiale et un rapport de partie étendue à bride défini comme la distance radialement entre la première position radiale et la deuxième position radiale et la distance radialement entre la première position radiale et la quatrième position radiale, est compris entre environ 1,49 et 5.

12. Une construction de roue (10) selon une quelconque des revendications 1 et 11, dans laquelle la ou chaque partie étendue (17", 19") comprend un élément de plaque supplémentaire (60") qui est fixé à la bride (16", 18"), et éventuellement dans laquelle la longueur de la ou chaque partie étendue (17", 19") est jusqu'à environ 114 mm.

13. Une construction de roue (10) selon une quelconque des revendications précédentes, dans laquelle au moins une des parties de raccordement de puits (34, 36) comprend une surface concave et/ou dans laquelle la paire de parties latérales (30, 32) peuvent être sensiblement identiques l'une à l'autre, bien qu'étant une image miroir l'une de l'autre autour d'un plan s'étendant sensiblement radialement et/ou dans laquelle la jante est sensiblement symétrique autour d'un axe central et/ou dans laquelle la construction de roue comprend en sus un disque pouvant être fixé à la jante (12).

14. Un véhicule de grue mobile comprenant une construction de roue (10) selon une quelconque des revendications précédentes.
